Europäisches Patentamt

European Patent Office

Office européen des brevets

(19)

(11) Veröffentlichungsnummer: **0 226 883**
**A2**

(12) # EUROPÄISCHE PATENTANMELDUNG

(21) Anmeldenummer: 86116643.7

(22) Anmeldetag: 29.11.86

(51) Int. Cl.⁴: **A 01 M 17/00**
**A 01 G 11/00**

(30) Priorität: 14.12.85 DE 3544308

(43) Veröffentlichungstag der Anmeldung:
01.07.87 Patentblatt 87/27

(84) Benannte Vertragsstaaten:
BE DE ES FR GR IT NL

(71) Anmelder: Wolff Walsrode Aktiengesellschaft
Postfach
D-3030 Walsrode 1(DE)

(72) Erfinder: Linde, Hartmut, Ing.-grad.
Grosse Heide 13
D-3032 Fallingbostel(DE)

(72) Erfinder: Mende, Reinhold, Dr.
Dürerring 45
D-3030 Walsrode(DE)

(74) Vertreter: Zobel, Manfred, Dr. et al,
c/o BAYER AG Konzernverwaltung RP Patentabteilung
Bayerwerk
D-5090 Leverkusen(DE)

(54) Verfahren zur Begasung von Böden.

(57) Verfahren zur Begasung von Böden, indem man die Böden mit Folien abdeckt und mit Wirkstoff begast, unter Verwendung einer Bodenabdeckfolie, bestehend aus einer gasdichten Oberfolie und einer mit der Oberfolie an den Rändern verbundenen gasdurchlässigen Unterfolie, die gleichzeitig als Gasbehälter dient, aus dem das Gas durch die Unterfolie in die zu behandelnden Böden diffundiert.

EP 0 226 883 A2

0226883

Wolff Walsrode AG                    3030 Walsrode-Bomlitz
                                     Zb/Ke-c


Verfahren zur Begasung von Böden


Die vorliegende Erfindung bezieht sich auf Verfahren zum Begasen von Böden mit Wirkstoffen, insbesondere Methylbromid, die sich dadurch auszeichnen, daß eine Bodenabdeckfolie gleichzeitig als Gasreservoir dient.

Der Einsatz von Wirkstoffen, insbesondere Methylbromid unter Verwendung von gasdichten Kunststoffolien zur Keimfreimachung von Kulturböden ist seit langem bekannt. Hierbei werden coextrudierte und/oder laminierte Verbundfolien auf Basis von Polyethylenfolien - mit oder ohne Barriere-Schicht - eingesetzt. Bei Verwendung von Verbunden mit einer Gasbarriere-Schicht besteht diese vorzugsweise aus Polyvinylidenchlorid, Polyester, weitgehend verseiftem Ethylen-Vinylacetat-Copolymerem oder Polyamid.

Das übliche Begasungsverfahren läuft im wesentlichen so ab, daß die zu behandelnde Bodenfläche mit der Kunststoffolie bedeckt wird. Um den Verlust an Methylbromid zu reduzieren, werden dabei die Folienränder vorzugsweise in die Erde eingegraben und anschließend Methylbromid durch

WW 5245-EP

0226883

perforierte PE-Schläuche, die im Abstand von 1-2 Metern unter der Folie verlegt sind, eingeleitet. Diese bekannte Verfahrensweise hat folgende Nachteile:

Da das Methylbromid durch die perforierten PE-Schläuche eingeleitet wird, ist die Gaskonzentration in unmittelbarer Nähe der Schläuche immer höher und bedingt so eine ungleichmäßige Verteilung der verbleibenden Bromidionen über die Bodenfläche.

Mit Ende der Gaseinleitung wird die maximale Methylbromid-Konzentration erreicht. Danach klingt sie exponentiell ab. Für die Schädlingsbekämpfung ist dieser Konzentrationsverlauf denkbar ungünstig, da die Einwirkzeit einer hohen Methylbromid-Konzentration relativ kurz ist.

Aus Sorge vor Mißerfolgen bei der Bekämpfung von Schädlingen und von Unkräutern wird die Methylbromid-Dosis pro Quadratmeter Boden häufig extrem hoch angesetzt. Für den Erfolg ist aber nicht die Dosis pro Quadratmeter Boden, sondern die Methylbromid-Konzentration in dem Gasraum unter der Folie und dem Boden entscheidend. Das Volumen des Gasraumes kann aber von Fall zu Fall unterschiedlich groß sein. Damit ergeben sich bei gleicher Dosierung pro Quadratmeter Boden zwangsläufig unterschiedliche Konzentrationen im Boden. Das bekannte Begasungsverfahren bietet daher keinerlei Kontrolle der maximalen Methylbromid-Konzentration unter der Folie und kann daher durch ständige Überdosierung zu einem Resistentwerden der Schädlinge führen.

Ziel der vorliegenden Erfindung war es daher, ein verbessertes Verfahren für die Begasung von Kulturböden mit Wirkstoffen, insbesondere Methylbromid zur Verfügung zu stellen, indem man die Wirkstoff-Zugabe so steuert, daß

1) eine gleichmäßige Verteilung des Wirkstoffes unter der Folie erreicht wird,

2) ein allmähliches Ansteigen der Wirkstoff-Konzentration im Gasraum der Folie bis zu einem maximalen Wert eingestellt wird, wobei dieser Wert über einen längeren Zeitraum nahezu konstant bleiben soll, und schließlich

3) eine kontrollierbare, maximale Wirkstoff-Konzentration unter der Folie vorgegeben werden kann, um damit ein Resistentwerden der Schädlinge und Unkräuter zu vermeiden und die Umwelt deutlich weniger zu belasten.

Gegenstand der Erfindung ist daher ein Verfahren zur Bekämpfung von Schädlingen und Unkräutern in Böden, indem man die Böden mit Folie abdeckt und mit gasförmigen Wirkstoffen, insbesondere Methylbromid begast, dadurch gekennzeichnet, daß eine Bodenabdeckfolie verwendet wird, die eine gasdichte Oberfolie und eine mit der Oberfolie an den Rändern verbundenen gasdurchlässigen Unterfolie aufweist und gleichzeitig als Wirkstoff bzw. Wirkstoff/Luftgasbehälter dient, aus dem das Gas durch die Unterfolie in die zu behandelnden Böden diffundiert. Vorzugsweise besteht die Abdeckfolie aus der Ober- und der Unterfolie.

Ein weiterer Gegenstand der Erfindung sind Bodenabdeckfolien, wie sie vorstehend beschrieben sind, zur Begasung von Böden mit Wirkstoffen, insbesondere Methylbromid.

Zur Herstellung der Oberfolie der als Gasbehälter dienenden Abdeckfolie können alle bekannten thermoplastischen, filmbildenden Kunststoffe verwendet werden, die selbst gasdichte Folien liefern oder zu Verbundfolien mit einer Gassperrschicht verarbeitet werden können. Thermoplasten mit einer ausreichenden Gasdichtigkeit sind z. B. Polyvinylidenchlorid, Polyester, über 90 Mol-% verseiftes Ethylen/Vinylacetat-Copolymeres, Polyvinylalkohol und Polyamid. Als Oberfolie können auch Metallfolien eingesetzt werden. Vorzugsweise besteht die Oberfolie aus einer Verbundfolie aus einer Polyethylenfolie, einer Gassperrschicht aus zu über 98 % verseiftem Ethylen/Vinylacetat-Copolymeren und einer Siegelschicht, vorzugsweise aus Polyethylen niederer Dichte und übliche Haftvermittlerschichten. Die Verbundfolie wird vorzugsweise durch (Co-)extrusion hergestellt.

Die Unterfolie sollte eine Folie mit einer Gasdurchlässigkeit von mindestens 100 g Methylbromid/(m² d. bar), vorzugsweise von mindestens 750 g Methybromid/(m² d. bar) sein. Vorzugsweise wird eine Polyolefinfolie wie z. B. eine Polyethylen-, Polypropylenfolie, eine Zellglasfolie oder eine Kombination solcher bekannten Folien eingesetzt. Besonders bevorzugt besteht die Unterfolie aus dem Polyethylen, aus dem auch die Siegelschicht der Oberfolie hergestellt ist.

WW 5245-EP

Die Oberfläche ist allseitig fest mit der Unterfolie an den Rändern, vorzugsweise über eine Breite von wenigstens 10 cm oder im Abstand von wenigstens 10 cm vom Rand, verbunden. Diese Verbindungsnaht kann in bekannter Weise, vorzugsweise durch Verkleben, oder Verschweißen (Versiegeln) erfolgen. Der so gebildete Gasbehälter hat außerdem in der Oberfolie eine verschließbare Einfüllöffnung, vorzugsweise ein Ventil, zur Gasbeschickung.

Bei den Wirkstoffen handelt es sich insbesondere um Schädlingsbekämpfungsmittel und Mittel gegen Pflanzenkrankheiten, z.B. Herbizide, Arthropodicide und Nematocide.

Besonders bevorzugt wird Methylbromid. Weiter sind geeignet Methylchlorid, Ethylendibromid, Phosphorwasserstoff, Cyanwasserstoff und Kohlendioxid.

Erfindungsgemäß wird vorzugsweise wie folgt gearbeitet, wobei statt Methylbromid auch ein anderer gasförmiger Wirkstoff verwendet werden kann:

Vor Beginn der Begasung wird entsprechend der zu begasenden Fläche in den Erdboden eine 5-10 cm tiefe Furche gegraben. Die Abdeckfolie wird dann mit der gasdurchlässigen Folienseite (Unterfolie) nach unten glatt auf den zu behandelnden Boden gelegt, wobei die Folienränder in den vorbereiteten Furchen zu liegen kommen sollen. Anschließend werden die Ränder bis zur Verbindungsnaht mit Erde bedeckt. Da dabei auch die am Rand vorhandene gas-

WW 5245-EP

0226883

dichte Oberfolie eingegraben wird, ist ein Methylbromid-Verlust durch die Folie hindurch bei der späteren Begasung praktisch ausgeschlossen.

Über die Einfüllöffnung, vorzugsweise ein Ventil, wird die Abdeckfolie mit wahlweise reinem Methylbromid oder zunächst mit Luft und anschließend mit Methylbromid beschickt, so daß eine bestimmte Methylbromid-Konzentration im Behälter eingestellt werden kann.

Über diese Methylbromid-Konzentration einer so vorgegebenen Methylbromid/Luftmischung im Behälter läßt sich die Diffusionsgeschwindigkeit des Methylbromids durch die gasdurchlässige Unterfolie und somit die Dauer des Begasungsvorgangs beeinflussen. Außerdem ist es so möglich, die maximale Konzentration im Bodenbereich zu begrenzen, die immer unterhalb der Ausgangskonzentration des Methylbromids im Behälter liegen wird, wodurch eine Überdosierung vermieden und ein dadurch verursachtes Resistentwerden der Schädlinge weitgehend verhindert werden kann.

Durch die erfindungsgemäße Verfahrensweise wird außerdem ein gleichmäßiges Verbreiten des Methylbromids in den Erdboden über die gesamte, durch die Folie bedeckte Fläche erreicht. Diese Verbreitung ist auch unabhängig von der Methylbromidvorgabe, und wird durch die Diffusion des Gases durch die Unterfolie gesteuert, die viel langsamer verläuft, als die Verteilung des Methylbromids im Folienbehälter. Durch diese Optimierung der Methylbromid-Verteilung über die zu begasende Bodenfläche wird die Wirtschaftlichkeit der Begasung deutlich verbessert.

WW 5245-EP

Diese Verbesserung wird auch dadurch erreicht, daß die Methylbromid-Konzentration im Gasraum zwischen Erdboden und Unterfolie erst allmählich, mit fortschreitender Diffusion des Gases durch die Unterfolie, ansteigt. Die maximale Methylbromid-Konzentration im Bodenbereich wird entweder dann erreicht, wenn die Konzentrationsverhältnisse oberhalb und unterhalb der Unterfolie gleich sind und/oder wenn der Methylbromidverbrauch im Boden ebenso groß ist, wie die durch Diffusion nachgelieferte Gasmenge.

Solange aus dem Depot Methylbromid nachgeliefert wird, verändert sich diese maximale Konzentration nur wenig und klingt erst stärker ab, wenn der Vorrat erschöpft ist. Daraus resultiert schließlich, daß mit einer weit geringeren Menge an Methylbromid als bisher eine ausreichende Vernichtung von Schädlingen und Unkräutern erzielt wird.

In Fig. 1 ist eine Draufsicht auf die Abdeckungsfolie abgebildet.

In Fig. 2. ist ein Querschnitt durch die verlegte Abdeckfolie, gefüllt mit Methylbromid, abgebildet.

Fig. 3 zeigt den Aufbau einer Oberfolie.

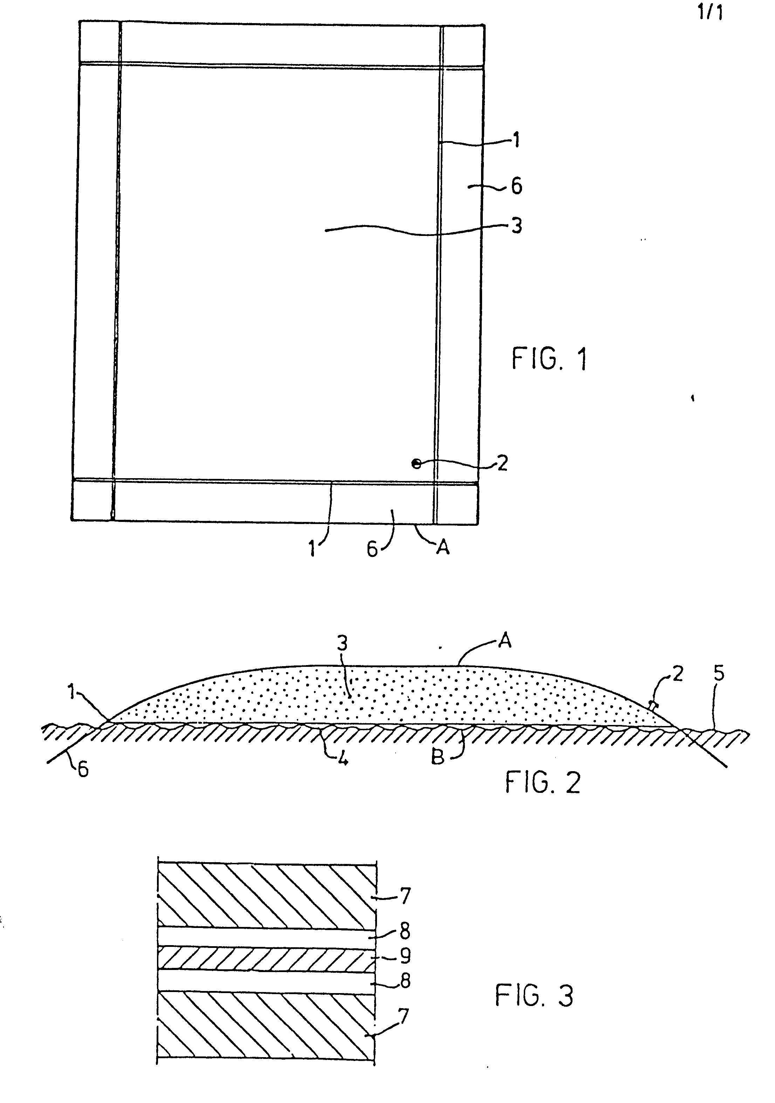

Im einzelnen wird in Fig. 1 in der Draufsicht auf die Abdeckungsfolie die Oberfolie (A) gezeigt, die über die Schweißnähte (1), den Verbindungsnähten, mit der Unterfolie (B) verbunden ist, wobei die Folienränder (6) und der Gasbehälter (3) entstehen. Der Gasbehälter (3) wird über die verschließbare Einfüllöffnung (2) mit Methylbromid bzw. einer Gasmischung aus Methylbromid und Luft gefüllt.

Fig. 2 zeigt die erfindungsgemäße Abdeckfolie in Funktion, wobei die Folienränder (6) bis zur Schweißnaht (1) in den Boden (4) eingegraben sind. Dabei liegt die Unterfolie (B) möglichst glatt auf der zu behandelnden Erdbodenoberfläche (5). Durch sie diffundiert aus dem Gasbehälter (3) das Gasgemisch gesteuert. Das Methylbromid bzw. Methylbromid/Luftgemisch ist durch das Ventil (2) in der gasdichten Oberfolie (A) eingefüllt worden.

In Fig. 3 ist der bevorzugte Aufbau der gasdichten Oberflächen A dargestellt, die aus einer Gassperrschicht (9), vorzugsweise aus verseiften Ethylen/Vinylacetat mit einer Dicke von 3 µm besteht, die auf jeder Oberfläche eine Kombination aus einer üblichen Haftvermittlerschicht mit einer Dicke von 2,5 µm (8) und einer Siegelschicht (7), vorzugsweise aus Polyethylen niederer Dichte mit einer Dicke von 16 µm trägt.

WW 5245-EP

## Beispiel

Der Gasbehälter wurde durch Verschweißen einer 40 µm dicken Oberfolie A mit einer 30 µm dicken Unterfolie B, entsprechend Fig. 1 und 2, hergestellt.

Die Oberfolie A hat einen symmetrischen Aufbau entsprechend Fig. 3. Zur Herstellung der Siegelschicht wurde ein Polyethylen niederer Dichte, zur Herstellung der Haftvermittlerschicht ein Polyethylen-Copolymer und als Sperrschichtmaterial ein Ethylen-Vinylalkohol-Copolymer verwendet. Die Unterfolie (B) wurde aus dem gleichen Polyethylen, wie die Oberfolie hergestellt.

Die Oberfolie A ist praktisch gasdicht und hat eine äußerst geringe Gasdurchlässigkeit von 0,0003 ml/h/m² / (ml/1), entsprechend ca. 0,03 g MeBr/(m² x d x bar) bei 30°C und die Unterfolie von 12 ml/h/m² (ml/1), entsprechend ca. 1200 g MeBr/(m² x d x bar) bei 30°C.

Die Abmessungen des so hergestellten Gasbehälters waren wie folgt:

| Länge: | 50 m |
|---|---|
| Breite: | 4 m |
| Folienrand: | 0,2 m. |

In eine Ecke der Oberfolie wurde eine verschließbare. Einfüllöffnung mit Hilfe eines Siegelkolbens durch Verschweißen mit der Folie von Hand angebracht. Anschließend wurden die Schweißnähte in üblicher Weise hergestellt.

WW 5245-EP

Vor der Begasung wurde in den Erdboden eine 10 cm tiefe Furche - entsprechend den Abmessungen des Gasbehälters - gegraben. Der Gasbehälter wurde nun mit der gasdurchlässigen Folienseite (Unterfolie B) nach unten glatt auf den zu behandelnden Kulturboden gelegt, in der Weise, daß die Ränder des Gasbehälters in den vorbereiteten Furchen lagen. Anschließend wurden die Ränder bis zur Schweißnaht hin mit Erde eingegraben.

Durch die Einfüllöffnung wurde ein Gasgemisch, bestehend aus einem Volumenteil Luft und einem Volumenteil MeBr, eingeleitet, insgesamt 9 kg MeBr (ca. 2m³) und 2 m³ Luft. Dies entspricht 50 g MeBr/m².

Nach einer Begasungszeit von 10 Tagen wurde der Gasbehälter unter Beachtung der üblichen Sicherheitsvorschriften für Methylbromid entfernt.

Bodenproben vor der Begasung hatten ergeben, daß pro 100 g Boden 97 Nematoden (Fadenwürmer) ausgezählt wurden. Nach der Begasung konnten in den Bodenproben keine Nematoden mehr festgestellt werden.

WW 5245-EP

Patentansprüche

1. Ein Verfahren zur Begasung von Böden, indem man die Böden mit Folien abdeckt und mit wenigstens einem gasförmigen Wirkstoff begast, dadurch gekennzeichnet, daß eine Bodenabdeckfolie verwendet wird, die eine gasdichte Oberfolie und eine mit der Oberfolie an den Rändern verbundenen gasdurchlässige Unterfolie aufweist und gleichzeitig als Gasbehälter dient, aus dem das Gas durch die Unterfolie in die zu behandelnden Böden diffundiert.

2. Verfahren nach Anspruch 1, dadurch gekennzeichnet, daß der Wirkstoff ein Schädlingsbekämpfungsmittel und/oder ein Mittel gegen Pflanzenkrankheiten ist.

3. Verfahren nach Anspruch 1, dadurch gekennzeichnet, daß der Wirkstoff Methylbromid ist.

4. Bodenabdeckfolie zum Begasen von Böden mit wenigstens einem gasförmigen Wirkstoff, dadurch gekennzeichnet, daß die Folie eine gasdichte Oberfolie und eine mit der Oberfolie an den Rändern verbundene gasdurchlässige Unterfolie aufweist, wobei die Folie gleichzeitig ein Behälter für den gasförmigen Wirkstoff ist.

5. Folie nach Anspruch 4, dadurch gekennzeichnet, daß sie aus einer gasdichten Oberfolie und einer mit der Oberfolie an den Rändern verbundenen gasdurchlässigen Unterfolie besteht.

WW 5245-EP

FIG. 1

FIG. 2

FIG. 3